# EUROPEAN PATENT SPECIFICATION

(11) **EP 2 853 998 B1**
(45) Date of publication and mention of the grant of the patent: **02.06.2021**
(21) Application number: 13866952.8
(22) Date of filing: 19.06.2013
(51) Int. Cl.: G06F 3/044, G06F 3/041

(54) **TOUCH POSITIONING METHOD, DEVICE AND TOUCH TERMINAL**
BERÜHRUNGSPOSITIONIERUNGSVERFAHREN, VORRICHTUNG DAFÜR UND BERÜHRUNGSEMPFINDLICHES ENDGERÄT
PROCÉDÉ DE POSITIONNEMENT TACTILE, DISPOSITIF ET TERMINAL TACTILE

(30) Priority: 28.12.2012 CN 201210587008
(43) Date of publication of application: 01.04.2015
(73) Proprietor: Huawei Device Co., Ltd., Dongguan, Guangdong 523808 (CN)
(72) Inventor: WU, Huangwei, Shenzhen Guangdong 518129 (CN)
(74) Representative: Gill Jennings & Every LLP
(86) International application number: PCT/CN2013/077436
(87) International publication number: WO 2014/101377

(56) References cited:
- EP-A2- 1 083 477
- WO-A1-2011/113057
- CN-A- 1 524 212
- CN-A- 103 019 497
- US-A1- 2011 134 061
- ANONYMOUS: "Dehooking Procedure for Handwriting on a Tablet", IBM TECHNICAL DISCLOSURE BULLETIN, INTERNATIONAL BUSINESS MACHINES CORP. (THORNWOOD), US, vol. 27, no. 5, 1 October 1984 (1984-10-01), pages 2995-2998, XP002163700, ISSN: 0018-8689

## Description

### TECHNICAL FIELD

The present invention relates to the field of communications technologies, and in particular, to a touch positioning method and apparatus, and a touch screen terminal.

### BACKGROUND

With the development of an intelligent terminal, a capacitive touch screen is widely used on the intelligent terminal as a display and input component of the intelligent terminal. A transparent thin-film conductor layer is plated on a surface layer of the capacitive touch screen; long and narrow electrodes are plated on four sides of the touch screen; and a low-voltage alternating electric field is formed in the thin-film conductor layer. When a user's finger is in contact with the touch screen, because of existence of a human electric field, a coupling capacitor is formed at a position of a contact point between the finger and the thin-film conductor layer, and currents emitted from the electrodes on the four sides flow to the contact point. Because current intensity is proportional to a distance between the finger and an electrode, the terminal can calculate a proportion and intensity of a current, so as to obtain a position of the contact point on the touch screen.

However, in the prior art, compared with a contact area of the finger on the touch screen when the finger taps the touch screen, in a process in which the user's finger leaves the touch screen, the contact area of the finger on the touch screen unevenly deforms in various directions, so that a tapping position obtained by calculation by a controller according to track information in the process in which the finger leaves the touch screen deviates from an actual tapping position that is before the finger leaves the touch screen, thereby causing inaccurate terminal positioning.

EP1083477 discloses a coordinate inputting/detecting apparatus, method and computer program product for optically detecting a position of a designating device inserted into a flat or substantially flat two-dimensional coordinate inputting/detecting area of the apparatus. In order to improve the determination of sliding input gestures the document further discloses to eliminate unintended line elements at the end of a sliding gesture input path based on a predetermined time frame indicating how much the actual lift-up point in time differs from the actual point in time at which the end of the sliding input has been registered.

### SUMMARY

Embodiments of the present invention provide a touch positioning method and apparatus, so as to solve a problem in the prior art that terminal positioning is inaccurate when a user's finger leaves a touch screen.

To solve the foregoing technical problem, the embodiments of the present invention disclose the following technical solutions:
According to a first aspect, a touch positioning method is provided, where the method includes:
recording first track information about moving of a contact point formed by the contact of a user's finger on a capacitive touch screen, the first track information comprising a contact range at each sampling time point when the contact point moves on the touchscreen;
determining, from the first track information, second track information that is before a process in which the contact point leaves the touch screen; and
positioning, according to the second track information, a position at which the contact point leaves the touch screen wherein determining, from the first track information, second track information further comprises:
   discarding track information within a determined time period corresponding to a process in which the contact point leaves the touch screen; wherein the determining, from the first track information, second track information that is before a process in which the contact point leaves the touch screen specifically is: determining the time period as a time period during which the contact range continuously changes in a process in which the contact point leaves the touchscreen and using a contact range of the contact point at a sampling time point that is immediately before the time period as the second track information that is before the process in which the contact point leaves the touchscreen; and the positioning, according to the second track information, a position at which the contact point leaves the touch screen specifically is: calculating a position according to the contact range of the contact point at the sampling time point that is immediately before the second time period, and determining the position obtained by calculation as the position at which the contact point leaves the touchscreen.

According to a second aspect, a touch positioning apparatus is provided, where the apparatus includes:
a recording unit, configured to record first track information about moving of a contact point formed by the contact of a user's finger on a capacitive touch screen, the first track information comprising a contact range at each sampling time point when the contact point moves on the touchscreen;
a determining unit, configured to determine, from the first track information recorded by the recording unit, second track information that is before a process in which the contact point leaves the touch screen; and
a positioning unit, configured to position, according to the second track information determined by the determining unit, a position at which the contact point leaves the touch screen wherein the determining unit is further configured to:
   discard track information within a determined time period corresponding to a process in which the contact point leaves the touch screen; wherein
   the determining unit is specifically configured to determine the time period as a time period during which the contact range continuously changes in a process in which the contact point leaves the touchscreen and use a contact range of the contact point at a sampling time point that is immediately before the second time period as the second track information that is before the process in which the contact point leaves the touchscreen; and the positioning unit is specifically configured to calculate a position according to the contact range of the contact point at the sampling time point that is immediately before the second time period, and determine the position obtained by calculation as the position at which the contact point leaves the touchscreen, wherein the contact range of the contact point at the sampling time point that is immediately before the time period is determined by the determining unit.

In the embodiments of the present invention, first track information about moving of a contact point on a touchscreen is recorded; second track information that is before a process in which the contact point leaves the touchscreen is determined from the first track information; and a position at which the contact point leaves the touchscreen is positioned according to the second track information. Because track information that is before the process in which the contact point leaves the touchscreen indicates an actual tapping position that is before a finger leaves the touchscreen, in the embodiments of the present invention, a position of the contact point can be accurately positioned according to the track information that is before the process in which the contact point leaves the touchscreen, so that accuracy of terminal positioning is improved and user experience of a user using a touch screen terminal is enhanced.

### BRIEF DESCRIPTION OF DRAWINGS

To describe the technical solutions in the embodiments of the present invention more second possible implementation manner of the second aspect, the first track information recorded by the recording unit includes the information about the position at each sampling time point;
the determining unit is specifically configured to determine the time period as a first time period, the first time period being preset or set by user adjustment according to a user's common touch habit, and use information about a position of the contact point at a sampling time point that is before the first time period as the second track information that is before the process in which the contact point leaves the touch screen; and
the positioning unit is specifically configured to determine the position of the contact point at the sampling time point that is immediately before the first time period as the position at which the contact point leaves the touch screen, where the position of the contact point at the sampling time point that is immediately before the first time period is determined by the determining unit.

With reference to the first possible implementation manner of the second aspect, in a third possible implementation manner of the second aspect,
the first track information recorded by the recording unit includes the contact range at each sampling time point;
the determining unit is specifically configured to determine the time period as a second time period, the second time period being a time during which the contact range continuously changes in a process in which the contact point leaves the touchscreen, and use a contact range of the contact point at a sampling time point that is immediately before the second time period as the second track information that is before the process in which the contact point leaves the touch screen; and
the positioning unit is specifically configured to calculate a position according to the contact range of the contact point at the sampling time point that is immediately before the second time period, and determine the position obtained by calculation as the position at which the contact point leaves the touch screen, where the contact range of the contact point at the sampling time point that is immediately before the second time period is determined by the determining unit.

With reference to the first possible implementation manner of the second aspect, in a fourth possible implementation manner of the second aspect,
the first track information recorded by the recording unit includes the information about the position at each sampling time point and the contact range at each sampling time point;
the determining unit is specifically configured to determine the time period as a second time period, the second time period being a time during which the contact range continuously changes in a process in which the contact point leaves the touchscreen, and use a contact range of the contact point at a sampling time point that is immediately before the second time period as the second track information that is before the process in which the contact point leaves the touch screen; and
the positioning unit is specifically configured to determine a position corresponding to the contact range of the contact point at the sampling time point that is immediately before the second time period as the position at which the contact point leaves the touch screen, where the contact range of the contact point at the sampling time point that is immediately before the second time period is determined by the determining unit.

According to a comparative example, a touch screen terminal is provided, where the touch screen terminal includes: a bus, and a touch screen, a memory, and a processor that are connected by using the bus, where:
the memory is configured to record first track information about moving of a contact point on the touch screen; and
the processor is configured to determine, from the first track information recorded by the memory, second track information that is before a process in which the contact point leaves the touch screen, and position, according to the second track information, a position at which the contact point leaves the touch screen.

With reference to the comparative example, in a first possible implementation manner of the comparative example,
the first track information recorded by the memory includes information about a position at each sampling time point when the contact point moves on the touch screen; and
the processor is specifically configured to acquire, from the first track information recorded by the memory, information about a position at each sampling time point in a first time period that is before the contact point leaves the touch screen, and determine a position of the contact point at a sampling time point that is before the first time period as the position at which the contact point leaves the touch screen.

With reference to the comparative example, in a second possible implementation manner of the comparative example,
the first track information recorded by the memory includes a contact range at each sampling time point when the contact point moves on the touch screen; and
the processor is specifically configured to acquire, from the first track information recorded by the memory, a contact range at each sampling time point in a second time period that is before the contact point leaves the touch screen, calculate a position according to a contact range of the contact point at a sampling time point that is before the second time period, and determine the position obtained by calculation as the position at which the contact point leaves the touch screen.

With reference to the comparative example, in a third possible implementation manner of the third aspect,
the first track information recorded by the memory includes information about a position at each sampling time point and a contact range at each sampling time point when the contact point moves on the touch screen; and
the processor is specifically configured to acquire, from the first track information recorded by the memory, a contact range at each sampling time point in a second time period that is before the contact point leaves the touch screen, and determine a position corresponding to a contact range of the contact point at a sampling time point that is before the second time period as the position at which the contact point leaves the touchscreen.

In the embodiments of the present invention, first track information about moving of a contact point on a touchscreen is recorded; second track information that is before a process in which the contact point leaves the touchscreen is determined from the first track information; and a position at which the contact point leaves the touchscreen is positioned according to the second track information. Because track information that is before the process in which the contact point leaves the touchscreen indicates an actual tapping position that is before a finger leaves the touchscreen, in the embodiments of the present invention, a position of the contact point can be accurately positioned according to the track information that is before the process in which the contact point leaves the touchscreen, so that accuracy of terminal positioning is improved and user experience of a user using a touch screen terminal is enhanced.

### BRIEF DESCRIPTION OF DRAWINGS

To describe the technical solutions in the embodiments of the present invention more clearly, the following briefly introduces the accompanying drawings required for describing the embodiments. Apparently, a person of ordinary skill in the art may still derive other drawings from these accompanying drawings without creative efforts.
FIG. 1A is a flowchart of a touch positioning method according to an embodiment of the present invention;
FIG. 1B is a schematic diagram of track information at a sampling time point according to an embodiment of the present invention;
FIG. 2 is a flowchart of a touch positioning method according to another embodiment of the present invention;
FIG. 3 is a flowchart of a touch positioning method according to another embodiment of the present invention;
FIG. 4 is a flowchart of a touch positioning method according to another embodiment of the present invention;
FIG. 5 is a block diagram of a touch positioning apparatus according to an embodiment of the present invention; and
FIG. 6 is a block diagram of a touch screen terminal according to an embodiment of the present invention.

### DESCRIPTION OF EMBODIMENTS

The following embodiments of the present invention provide a touch positioning method and apparatus, and a touch screen terminal.

To enable a person skilled in the art to better understand the technical solutions of the embodiments of the present invention and to make the foregoing objectives, features, and advantages of the embodiments of the present invention more obvious and comprehensible, the following describes the technical solutions of the embodiments of the present invention in further detail with reference to the accompanying drawings.

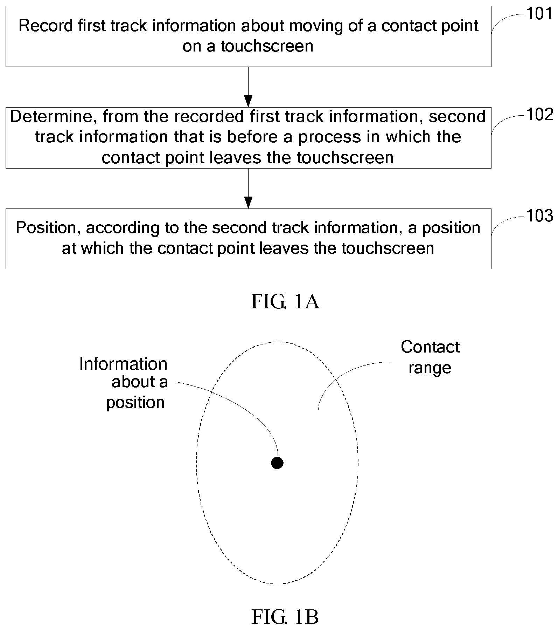

Referring to FIG. 1A, FIG. 1A is a flowchart of an embodiment of a touch positioning method according to the present invention.

Step 101: Record first track information about moving of a contact point on a touchscreen.

In this embodiment, the first track information about the moving of the contact point on the touchscreen may include: information about a position at each sampling time point when the contact point moves on the touchscreen, or a contact range at each sampling time point when the contact point moves on the touch screen, or information about a position and a contact range at each sampling time point when the contact point moves on the touchscreen.

A terminal using this method embodiment of the present invention usually has a capacitive touchscreen. When a user's finger is in contact with the touch screen, a contact point is formed on the touchscreen; a contact range of the contact point on the touch screen can be obtained according to a coupling capacitor formed on the contact point; and a position of the contact point in the contact range can further be calculated according to the contact range, where the calculating the position of the contact point according to the contact range may use a calculation manner in the prior art, which is not repeatedly described in this embodiment of the present invention.

As shown in FIG. 1B, FIG. 1B shows a schematic diagram of track information at a sampling time point. An oval area is a contact range of the contact point on the touchscreen at a sampling time point, and a round dot in a center of the oval area indicates the information that is about the position of the contact point and is determined according to the contact range.

Step 102: Determine, from the recorded first track information, second track information that is before a process in which the contact point leaves the touchscreen.

In this embodiment, when it is determined that the contact point leaves the touchscreen, track information that is before the process in which the contact point leaves the touchscreen may be found from the recorded first track information. When it is determined whether the contact point leaves the touch screen, the terminal may detect whether there is a coupling capacitor between the contact point and the touchscreen. When there is no coupling capacitor between the contact point and the touchscreen, it may be determined that the contact point has left the touch screen.

Optionally, when the recorded first track information includes the information about the position at each sampling time point, information about a position at each sampling time point in a first time period that is before the contact point leaves the touchscreen may be acquired from the recorded first track information, and information about a position of the contact point at a sampling time point that is before the first time period is used as the second track information that is before the process in which the contact point leaves the touchscreen.

Optionally, when the recorded first track information includes the contact range at each sampling time point, a contact range at each sampling time point in a second time period that is before the contact point leaves the touchscreen may be acquired from the recorded first track information, and a contact range of the contact point at a sampling time point that is before the second time period is used as the second track information that is before the process in which the contact point leaves the touchscreen.

Step 103: Position, according to the second track information, a position at which the contact point leaves the touchscreen.

Optionally, when the first track information recorded in step 101 includes the information about the position at each sampling time point, and when the information about the position at each sampling time point in the first time period that is before the contact point leaves the touchscreen is acquired from the first track information in step 102, the position of the contact point at the sampling time point that is before the first time period may be determined as the position at which the contact point leaves the touchscreen.

Optionally, when the first track information recorded in step 101 includes the contact range at each sampling time point, and when the contact range at each sampling time point in the second time period that is before the contact point leaves the touchscreen is acquired from the first track information in step 102, a position may be calculated according to the contact range of the contact point at the sampling time point that is before the second time period, and the position obtained by calculation is determined as the position at which the contact point leaves the touchscreen.

Optionally, when the first track information recorded in step 101 includes the information about the position and the contact range at each sampling time point, and when the contact range at each sampling time point in the second time period that is before the contact point leaves the touchscreen is acquired from the first track information in step 102, a position corresponding to the contact range of the contact point at the sampling time point that is before the second time period may be determined as the position at which the contact point leaves the touchscreen.

It can be seen from the foregoing embodiment that, because track information that is before a process in which a contact point leaves a touchscreen indicates an actual tapping position that is before a finger leaves the touchscreen, in this embodiment of the present invention, a position of the contact point can be accurately positioned according to the track information that is before the process in which the contact point leaves the touchscreen, so that accuracy of terminal positioning is improved and user experience of a user using a touch screen terminal is enhanced.

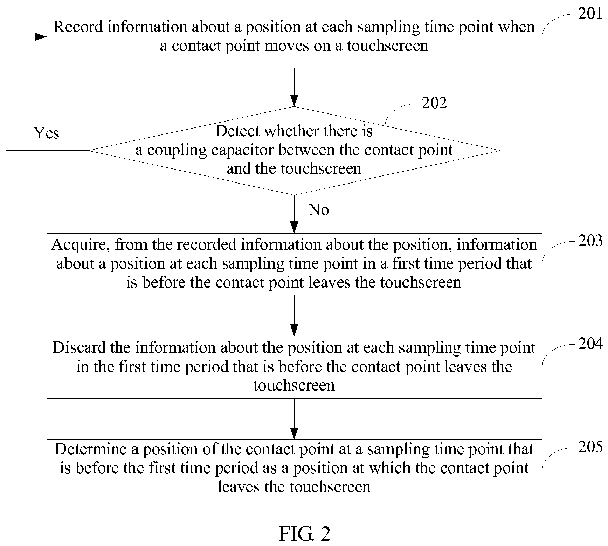

Referring to FIG. 2, FIG. 2 is a flowchart of another embodiment of a touch positioning method according to the present invention.

Step 201: Record information about a position at each sampling time point when a contact point moves on a touchscreen.

A terminal using this method embodiment of the present invention usually has a capacitive touchscreen. When a user's finger is in contact with the touch screen, a contact point is formed on the touchscreen; a contact range of the contact point on the touch screen can be obtained according to a coupling capacitor formed on the contact point; and a position of the contact point in the contact range can further be calculated according to the contact range. In this embodiment, the position, of the contact point, is obtained by calculation according to the contact range may be recorded.

Step 202: Detect whether there is a coupling capacitor between the contact point and the touchscreen. If there is a coupling capacitor between the contact point and the touch screen, return to step 201; if there is no coupling capacitor between the contact point and the touch screen, perform step 203.

Step 203: Acquire, from the recorded information about the position, information about a position at each sampling time point in a first time period that is before the contact point leaves the touchscreen.

When there is no coupling capacitor between the contact point and the touchscreen, it is determined that the contact point has left the touchscreen.

In this embodiment, the first time period is approximate time required in a process in which the contact point leaves the touchscreen, and the time is time obtained according to a user's common touch habit, for example, the time may be set to 0.2s. In an actual application process, the first time period may be preset by a terminal, and may also be set by a user by adjustment, which is not limited in this embodiment of the present invention.

Step 204: Discard the information about the position at each sampling time point in the first time period that is before the contact point leaves the touchscreen.

Because the information about the position at each sampling time point in the first time period that is before the contact point leaves the touch screen deviates from information about an actual position of the contact point, in this embodiment of the present invention, the information about the position at each sampling time point in the first time period that is before the contact point leaves the touchscreen may be discarded. In addition, because the information about the position is usually recorded in a cache of the terminal, discarding the information about the position at each sampling time point in the first time period can save cache space.

Step 205: Determine a position of the contact point at a sampling time point that is before the first time period as a position at which the contact point leaves the touchscreen.

Because the actual position of the contact point may accurately be positioned according to a position information that is before the process in which the contact point leaves the touch screen, in this embodiment, a position recorded at a sampling time point that is before the first time period may be determined as the position at which the contact point leaves the touchscreen. For example, 0.5s is totally used from coming into contact with the touch screen to leaving the touchscreen by the contact point, where every 0.1s is a sampling time point, and the terminal totally records positions of the contact point at 0.1s, 0.2s, 0.3s, and 0.4s. When the first time period is 0.2s, the first time period includes 0.3s and 0.4, then a sampling time point that is before the first time period is 0.2s, and the recorded position at 0.2s is determined as the position at which the contact point leaves the touchscreen.

It can be seen from the foregoing embodiment that, because track information that is before a process in which a contact point leaves a touchscreen indicates an actual tapping position that is before a finger leaves the touchscreen, in this embodiment of the present invention, a position of the contact point can be accurately positioned according to the track information that is before the process in which the contact point leaves the touchscreen, so that accuracy of terminal positioning is improved and user experience of a user using a touch screen terminal is enhanced.

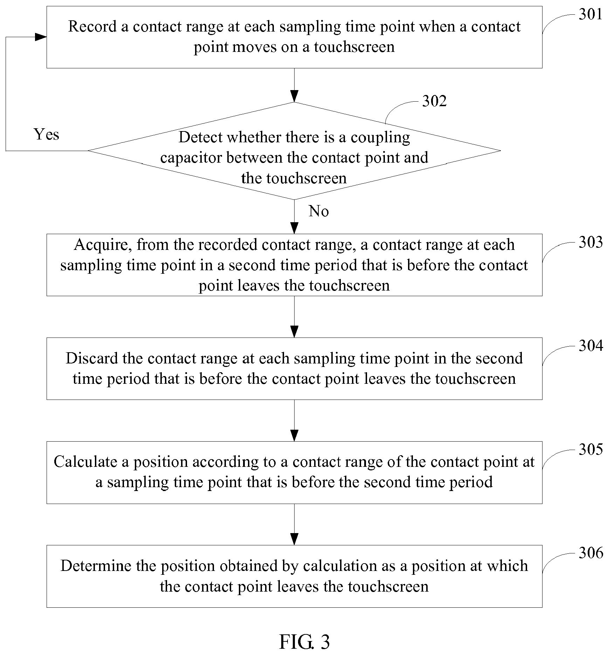

Referring to FIG. 3, FIG. 3 is a flowchart of another embodiment of a touch positioning method according to the present invention.

Step 301: Record a contact range at each sampling time point when a contact point moves on a touch screen.

A terminal using this method embodiment of the present invention usually has a capacitive touchscreen. When a user's finger is in contact with the touch screen, a contact point is formed on the touchscreen, and a contact range of the contact point on the touch screen can be obtained according to a coupling capacitor formed on the contact point. In this embodiment, the obtained contact range of the contact point on the touchscreen may be recorded.

Step 302: Detect whether there is a coupling capacitor between the contact point and the touchscreen. If there is a coupling capacitor between the contact point and the touch screen, return to step 301; if there is no coupling capacitor between the contact point and the touchscreen, perform step 303.

Step 303: Acquire, from the recorded contact range, a contact range at each sampling time point in a second time period that is before the contact point leaves the touchscreen.

When there is no coupling capacitor between the contact point and the touchscreen, it is determined that the contact point has left the touchscreen.

In this embodiment, the second time period is time during which the contact range continuously changes in a process in which the contact point leaves the touchscreen. For example, a contact range recorded in 0.5s that is before the contact point leaves the touchscreen continuously becomes smaller, and then it indicates that the 0.5s process is the process in which the contact point leaves the touch screen.

Step 304: Discard the contact range at each sampling time point in the second time period that is before the contact point leaves the touchscreen.

Because the contact range at each sampling time point in the second time period that is before the contact point leaves the touch screen deviates from a contact range corresponding to information about an actual position of the contact point, in this embodiment of the present invention, the contact range at each sampling time point in the second time period that is before the contact point leaves the touchscreen may be discarded. In addition, because the contact range is usually recorded in a cache of the terminal, discarding the contact range at each sampling time point in the second time period can save cache space.

Step 305: Calculate a position according to a contact range of the contact point at a sampling time point that is before the second time period.

Because the actual position of the contact point may accurately be positioned according to a contact range of the contact point that is before the process in which the contact point leaves the touch screen, in this embodiment, the position may be calculated according to a contact range of the contact point at a sampling time point that is before the second time period. For example, 0.9s is totally used from coming into contact with the touch screen to leaving the touchscreen by the contact point, where every 0.1s is a sampling time point, and the terminal totally records contact ranges of the contact point on the touchscreen at 0.1s, 0.2s, 0.3s, 0.4s, 0.5s, 0.6s, 0.7s, 0.8s, and 0.9s. If a contact range in 0.5s that is before the contact point leaves the touchscreen continuously becomes smaller, it may be determined that a contact range recorded at a sampling time point that is before the 0.5s, that is, at 0.4s, is a contact range corresponding to a position at which the contact point leaves the touch screen, and a position of the contact point at 0.4s may be calculated according to the contact range.

Step 306: Determine the position obtained by calculation as a position at which the contact point leaves the touchscreen.

It can be seen from the foregoing embodiment that, because track information that is before a process in which a contact point leaves a touchscreen indicates an actual tapping position that is before a finger leaves the touchscreen, in this embodiment of the present invention, a position of the contact point can be accurately positioned according to the track information that is before the process in which the contact point leaves the touchscreen, so that accuracy of terminal positioning is improved and user experience of a user using a touch screen terminal is enhanced.

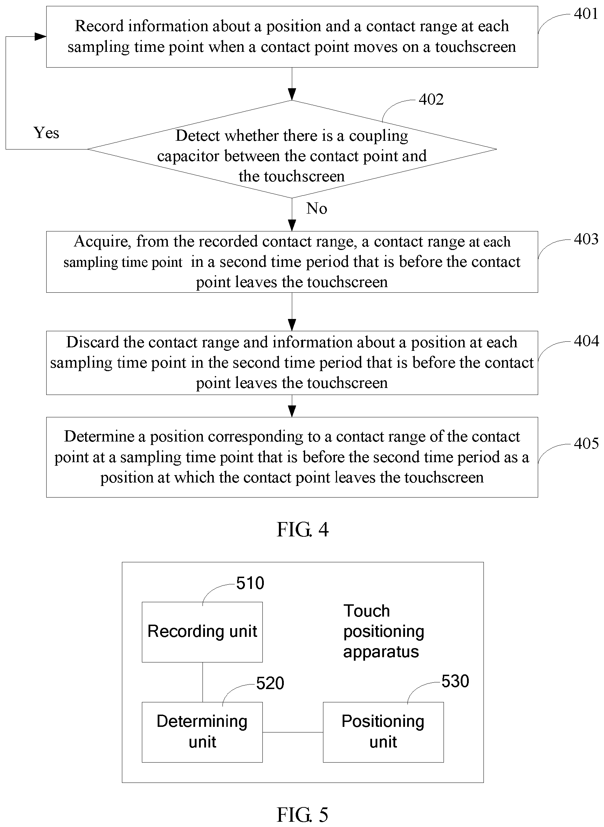

Referring to FIG. 4, FIG. 4 is a flowchart of another embodiment of a touch positioning method according to the present invention.

Step 401: Record information about a position and a contact range at each sampling time point when a contact point moves on a touchscreen.

A terminal using this method embodiment of the present invention usually has a capacitive touchscreen. When a user's finger is in contact with the touch screen, a contact point is formed on the touchscreen; a contact range of the contact point on the touch screen can be obtained according to a coupling capacitor formed on the contact point; and a position of the contact point in the contact range can further be calculated according to the contact range. In this embodiment, the obtained contact range of the contact point on the touch screen, and the position, of the contact point, obtained by calculation according to the contact range may be recorded.

Step 402: Detect whether there is a coupling capacitor between the contact point and the touchscreen. If there is a coupling capacitor between the contact point and the touch screen, return to step 401; if there is no coupling capacitor between the contact point and the touch screen, perform step 403.

Step 403: Acquire, from the recorded contact range, a contact range at each sampling time point in a second time period that is before the contact point leaves the touch screen.

When there is no coupling capacitor between the contact point and the touchscreen, it is determined that the contact point has left the touchscreen.

In this embodiment, the second time period is time during which the contact range continuously changes in a process in which the contact point leaves the touchscreen. For example, a contact range recorded in 0.5s that is before the contact point leaves the touchscreen continuously becomes smaller, and then it indicates that the 0.5s process is the process in which the contact point leaves the touchscreen.

Step 404: Discard the contact range and information about a position at each sampling time point in the second time period that is before the contact point leaves the touchscreen.

Because the contact range at each sampling time point in the second time period that is before the contact point leaves the touch screen deviates from a contact range corresponding to information about an actual position of the contact point, in this embodiment of the present invention, the contact range and the information about the position at each sampling time point in the second time period that is before the contact point leaves the touchscreen may be discarded. In addition, because the contact range and the information about the position are usually recorded in a cache of the terminal, discarding the contact range and the information about the position at each sampling time point in the second time period can save cache space.

Step 405: Determine a position corresponding to a contact range of the contact point at a sampling time point that is before the second time period as a position at which the contact point leaves the touchscreen.

In this embodiment, because the contact range and the information about the position of the contact point at each sampling time point are recorded, once after a contact range of the contact point at a sampling time point that is before the second time period is obtained, a position corresponding to the contact range may be obtained, and the position is determined as the position at which the contact point leaves the touchscreen.

It can be seen from the foregoing embodiment that, because track information that is before a process in which a contact point leaves a touchscreen indicates an actual tapping position that is before a finger leaves the touchscreen, in this embodiment of the present invention, a position of the contact point can be accurately positioned according to the track information that is before the process in which the contact point leaves the touchscreen, so that accuracy of terminal positioning is improved and user experience of a user using a touch screen terminal is enhanced.

Corresponding to the embodiments of the touch positioning method according to the present invention, the present invention further provides embodiments of a touch positioning apparatus and a touch screen terminal.

Referring to FIG. 5, FIG. 5 is a block diagram of an embodiment of a touch positioning apparatus according to the present invention.

The apparatus includes a recording unit 510, a determining unit 520, and a positioning unit 530.

The recording unit 510 is configured to record first track information about moving of a contact point on a touchscreen;
the determining unit 520 is configured to determine, from the first track information recorded by the recording unit 510, second track information that is before a process in which the contact point leaves the touchscreen; and
the positioning unit 530 is configured to position, according to the second track information determined by the determining unit 520, a position at which the contact point leaves the touchscreen.

Optionally, the first track information recorded by the recording unit 510 includes at least one of the following information:
information about a position at each sampling time point when the contact point moves on the touch screen; and
a contact range at each sampling time point when the contact point moves on the touchscreen.

In a first specific embodiment:
the first track information recorded by the recording unit 510 includes the information about the position at each sampling time point;
the determining unit 520 is specifically configured to acquire, from the first track information recorded by the recording unit 510, information about a position at each sampling time point in a first time period that is before the contact point leaves the touchscreen, and use information about a position of the contact point at a sampling time point that is before the first time period as the second track information that is before the process in which the contact point leaves the touchscreen; and
the positioning unit 530 is specifically configured to determine the position of the contact point at the sampling time point that is before the first time period as the position at which the contact point leaves the touch screen, where the position of the contact point at the sampling time point that is before the first time period is determined by the determining unit 520.

In a second specific embodiment:
the first track information recorded by the recording unit 510 includes the contact range at each sampling time point;
the determining unit 520 is specifically configured to acquire, from the first track information recorded by the recording unit 510, a contact range at each sampling time point in a second time period that is before the contact point leaves the touchscreen, and use a contact range of the contact point at a sampling time point that is before the second time period as the second track information that is before the process in which the contact point leaves the touchscreen; and
the positioning unit 530 is specifically configured to calculate a position according to the contact range of the contact point at the sampling time point that is before the second time period, and determine the position obtained by calculation as the position at which the contact point leaves the touchscreen, where the contact range of the contact point at the sampling time point that is before the second time period is determined by the determining unit 520.

In a third specific embodiment:
the first track information recorded by the recording unit 510 includes the information about the position at each sampling time point and the contact range at each sampling time point;
the determining unit 520 is specifically configured to acquire, from the first track information recorded by the recording unit 510, a contact range at each sampling time point in a second time period that is before the contact point leaves the touchscreen, and use a contact range of the contact point at a sampling time point that is before the second time period as the second track information that is before the process in which the contact point leaves the touchscreen; and
the positioning unit 530 is specifically configured to determine a position corresponding to the contact range of the contact point at the sampling time point that is before the second time period as the position at which the contact point leaves the touchscreen, where the contact range of the contact point at the sampling time point that is before the second time period is determined by the determining unit 520.

Optionally, the foregoing touch positioning apparatus may further include a discarding unit (not shown in FIG. 5), configured to, after the determining unit 520 determines the second track information, discard the first track information recorded in the recording unit 510.

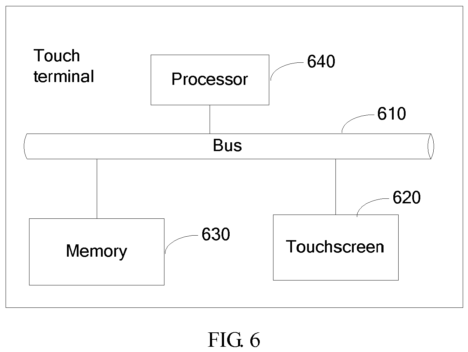

Referring to FIG. 6, FIG. 6 is a block diagram of an embodiment of a touch screen terminal according to the present invention.

The touch screen terminal includes a bus 610, and a touchscreen 620, a memory 630, and a processor 640 that are connected by using the bus 610.

The memory 630 is configured to record first track information about moving of a contact point on the touch screen 620; and
the processor 640 is configured to determine, from the first track information recorded by the memory 630, second track information that is before a process in which the contact point leaves the touchscreen 620, and position, according to the second track information, a position at which the contact point leaves the touchscreen 620.

Further, the processor 640 may further be configured to discard the first track information recorded in the memory 630.

In a first specific embodiment:
the first track information recorded by the memory 630 includes information about a position at each sampling time point when the contact point moves on the touchscreen 620; and
the processor 640 is specifically configured to acquire, from the first track information recorded by the memory 630, information about a position at each sampling time point in a first time period that is before the contact point leaves the touchscreen 620, and determine a position of the contact point at a sampling time point that is before the first time period as the position at which the contact point leaves the touchscreen 620.

In a second specific embodiment:
the first track information recorded by the memory 630 includes a contact range at each sampling time point when the contact point moves on the touchscreen 620; and
the processor 640 is specifically configured to acquire, from the first track information recorded by the memory 630, a contact range at each sampling time point in a second time period that is before the contact point leaves the touch screen 620, calculate a position according to a contact range of the contact point at a sampling time point that is before the second time period, and determine the position obtained by calculation as the position at which the contact point leaves the touchscreen 620.

In a third specific embodiment:
the first track information recorded by the memory 630 includes information about a position at each sampling time point and a contact range at each sampling time point when the contact point moves on the touchscreen 620; and
the processor 640 is specifically configured to acquire, from the first track information recorded by the memory 630, a contact range at each sampling time point in a second time period that is before the contact point leaves the touch screen 620, and determine a position corresponding to a contact range of the contact point at a sampling time point that is before the second time period as the position at which the contact point leaves the touchscreen 620.

It can be seen from the foregoing embodiment that, in this embodiment, first track information about moving of a contact point on a touchscreen is recorded; second track information that is before a process in which the contact point leaves the touchscreen is determined from the first track information; and a position at which the contact point leaves the touchscreen is positioned according to the second track information. Because track information that is before the process in which the contact point leaves the touchscreen indicates an actual tapping position that is before a finger leaves the touchscreen, in this embodiment of the present invention, a position of the contact point can be accurately positioned according to the track information that is before the process in which the contact point leaves the touchscreen, so that accuracy of terminal positioning is improved and user experience of a user using a touch screen terminal is enhanced.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, the system embodiment is basically similar to the method embodiment, and therefore is described briefly; for related parts, reference may be made to partial descriptions in the method embodiment.

## Claims

1. A touch positioning method, wherein the method comprises:
recording (101) first track information about moving of a contact point formed by the contact of a user's finger on a capacitive touch screen, the first track information comprising a contact range at each sampling time point when the contact point moves on the touchscreen;
determining (102), from the first track information, second track information that is before a process in which the contact point leaves the touchscreen; and
positioning (103), according to the second track information, a position at which the contact point leaves the touch screen wherein determining, from the first track information, second track information further comprises:
discarding track information within a determined time period corresponding to a process in which the contact point leaves the touch screen;
wherein the determining, from the first track information, second track information that is before a process in which the contact point leaves the touch screen specifically is:
determining the time period as a time period during which the contact range continuously changes in a process in which the contact point leaves the touchscreen and using a contact range of the contact point at a sampling time point that is immediately before the time period as the second track information that is before the process in which the contact point leaves the touchscreen; and
the positioning, according to the second track information, a position at which the contact point leaves the touch screen specifically is:
calculating a position according to the contact range of the contact point at the sampling time point that is immediately before the time period, and determining the position obtained by calculation as the position at which the contact point leaves the touchscreen.

2. The method according to claim 1, wherein the first track information further comprises:
information about a position at each sampling time point when the contact point moves on the touchscreen.

3. A touch positioning apparatus, wherein the apparatus comprises:
a recording unit (510), configured to record first track information about moving of a contact point formed by the contact of a user's finger on a capacitive touchscreen, the first track information comprising a contact range at each sampling time point when the contact point moves on the touchscreen;
a determining unit (520), configured to determine, from the first track information recorded by the recording unit, second track information that is before a process in which the contact point leaves the touchscreen; and
a positioning unit (530), configured to position, according to the second track information determined by the determining unit, a position at which the contact point leaves the touchscreen, wherein the determining unit is further configured to:
discard track information within a determined time period corresponding to a process in which the contact point leaves the touch screen; wherein
the determining unit is specifically configured to determine the time period as a time during which the contact range continuously changes in a process in which the contact point leaves the touchscreen and use a contact range of the contact point at a sampling time point that is immediately before the time period as the second track information that is before the process in which the contact point leaves the touchscreen; and
the positioning unit is specifically configured to calculate a position according to the contact range of the contact point at the sampling time point that is immediately before the second time period, and determine the position obtained by calculation as the position at which the contact point leaves the touchscreen, wherein the contact range of the contact point at the sampling time point that is immediately before the time period is determined by the determining unit.

4. The apparatus according to claim 3, wherein the first track information recorded by the recording unit further comprises:
information about a position at each sampling time point when the contact point moves on the touchscreen.

## Patentansprüche

1. Berührungspositionsbestimmungsverfahren, wobei das Verfahren Folgendes umfasst:
Aufzeichnen (101) von ersten Spurinformationen über Bewegen eines Kontaktpunkts, der durch den Kontakt eines Fingers eines Benutzers auf einem kapazitiven Berührungsbildschirm gebildet wird, wobei die ersten Spurinformationen einen Kontaktbereich zu jedem Abtastzeitpunkt, wenn sich der Kontaktpunkt auf dem Berührungsbildschirm bewegt, umfasst;
Bestimmen (102), aus den ersten Spurinformationen, von zweiten Spurinformationen, die vor einem Prozess, in dem der Kontaktpunkt den Berührungsbildschirm verlässt, liegen; und
Positionsbestimmen (103), gemäß den zweiten Spurinformationen, einer Position, an der der Kontaktpunkt den Berührungsbildschirm verlässt, anhand der ersten Spurinformationen, wobei das Bestimmen, anhand der ersten Spurinformationen, von zweiten Spurinformationen ferner Folgendes umfasst:
Verwerfen von Spurinformationen innerhalb eines bestimmten Zeitraums, der einem Prozess entspricht, in dem der Kontaktpunkt den Berührungsbildschirm verlässt;
wobei das Bestimmen, anhand der ersten Spurinformationen, von zweiten Spurinformationen, die vor einem Prozess, in dem der Kontaktpunkt den Berührungsbildschirm verlässt, liegen, insbesondere Folgendes ist:
Bestimmen des Zeitraums als einen Zeitraum, während dem sich der Kontaktbereich kontinuierlich in einem Prozess, in dem der Kontaktpunkt den Berührungsbildschirm verlässt, ändert, und Verwenden eines Kontaktbereichs des Kontaktpunkts zu einem Abtastzeitpunkt, der unmittelbar vor dem Zeitraum liegt, als die zweiten Spurinformationen, die vor dem Prozess, in dem der Kontaktpunkt den Berührungsbildschirm verlässt, liegen; und
wobei das Positionsbestimmen, gemäß den zweiten Spurinformationen, einer Position, an der der Kontaktpunkt den Berührungsbildschirm verlässt, insbesondere Folgendes ist:
Berechnen einer Position gemäß dem Kontaktbereich des Kontaktpunkts zum Abtastzeitpunkt, der unmittelbar vor dem Zeitraum liegt, und Bestimmen der durch Berechnung erhaltenen Position als die Position, an der der Kontaktpunkt den Berührungsbildschirm verlässt.

2. Verfahren nach Anspruch 1, wobei die ersten Spurinformationen ferner Folgendes umfassen:
Informationen über eine Position an jedem Abtastzeitpunkt, wenn sich der Kontaktpunkt auf dem Bildschirm bewegt.

3. Berührungspositionsbestimmungseinrichtung, wobei die Einrichtung Folgendes umfasst:
eine Aufzeichnungseinheit (510), ausgelegt zum Aufzeichnen von ersten Spurinformationen über Bewegen eines Kontaktpunkts, der durch den Kontakt eines Fingers eines Benutzers auf einem kapazitiven Berührungsbildschirm gebildet wird, wobei die ersten Spurinformationen einen Kontaktbereich zu jedem Abtastzeitpunkt, wenn sich der Kontaktpunkt auf dem Berührungsbildschirm bewegt, umfasst;
eine Bestimmungseinheit (520), ausgelegt zum Bestimmen, aus den durch die Aufzeichnungseinheit aufgezeichneten ersten Spurinformationen, von zweiten Spurinformationen, die vor einem Prozess, in dem der Kontaktpunkt den Berührungsbildschirm verlässt, liegen; und
eine Positionsbestimmeinheit (530), ausgelegt zum Positionsbestimmen, gemäß den durch die Bestimmungseinheit bestimmten zweiten Spurinformationen, einer Position, an der der Kontaktpunkt den Berührungsbildschirm verlässt, wobei die Bestimmungseinheit ferner ausgelegt ist zum:
Verwerfen von Spurinformationen innerhalb eines bestimmten Zeitraums, der einem Prozess entspricht, in dem der Kontaktpunkt den Berührungsbildschirm verlässt; wobei
die Bestimmungseinheit insbesondere ausgelegt ist zum Bestimmen des Zeitraums als einen Zeitraum, während dem sich der Kontaktbereich kontinuierlich in einem Prozess, in dem der Kontaktpunkt den Berührungsbildschirm verlässt, ändert, und Verwenden eines Kontaktbereichs des Kontaktpunkts zu einem Abtastzeitpunkt, der unmittelbar vor dem Zeitraum liegt, als die zweiten Spurinformationen, die vor dem Prozess, in dem der Kontaktpunkt den Berührungsbildschirm verlässt, liegen; und
die Positionsbestimmeinheit insbesondere ausgelegt ist zum Berechnen einer Position gemäß dem Kontaktbereich des Kontaktpunkts zum Abtastzeitpunkt, der unmittelbar vor dem zweiten Zeitraum liegt, und Bestimmen der durch Berechnung erhaltenen Position als die Position, an der der Kontaktpunkt den Berührungsbildschirm verlässt, wobei der Kontaktbereich des Kontaktpunkts zum Abtastzeitpunkt, der unmittelbar vor dem Zeitraum liegt, durch die Bestimmungseinheit bestimmt wird.

4. Einrichtung nach Anspruch 3, wobei die durch die Aufzeichnungseinheit aufgezeichneten ersten Spurinformationen ferner Folgendes umfassen:
Informationen über eine Position zu jedem Abtastzeitpunkt, wenn sich der Kontaktpunkt auf dem Berührungsbildschirm bewegt.

## Revendications

1. Procédé de positionnement tactile, dans lequel le procédé comprend :
l'enregistrement (101) de premières informations de suivi concernant le déplacement d'un point de contact formé par le contact du doigt d'un utilisateur sur un écran tactile capacitif, les premières informations de suivi comprenant une étendue de contact à chaque instant d'échantillonnage lorsque le point de contact se déplace sur l'écran tactile ;
la détermination (102), à partir des premières informations de suivi, de secondes informations de suivi qui sont avant un processus dans lequel le point de contact quitte l'écran tactile ; et
le positionnement (103), selon les secondes informations de suivi, d'une position à laquelle le point de contact quitte l'écran tactile, dans lequel la détermination, à partir des premières informations de suivi, de secondes informations de suivi comprend en outre :
le rejet d'informations de suivi au sein d'une période prédéterminée correspondant à un processus dans lequel le point de contact quitte l'écran tactile ;
dans lequel la détermination, à partir des premières informations de suivi, de secondes informations de suivi qui sont avant un processus dans lequel le point de contact quitte l'écran tactile est spécifiquement :
la détermination de la période en tant que période durant laquelle l'étendue de contact change de façon continue dans un processus dans lequel le point de contact quitte l'écran tactile et l'utilisation d'une étendue de contact du point de contact à un instant d'échantillonnage qui est immédiatement avant la période en tant que secondes informations de suivi qui sont avant le processus dans lequel le point de contact quitte l'écran tactile ; et
le positionnement, selon les secondes informations de suivi, d'une position à laquelle le point de contact quitte l'écran tactile est spécifiquement :
le calcul d'une position selon l'étendue de contact du point de contact à l'instant d'échantillonnage qui est immédiatement avant la période, et la détermination de la position obtenue par calcul en tant que position à laquelle le point de contact quitte l'écran tactile.

2. Procédé selon la revendication 1, dans lequel les premières informations de suivi comprennent en outre :
des informations concernant une position à chaque instant d'échantillonnage lorsque le point de contact se déplace sur l'écran tactile.

3. Appareil de positionnement tactile, dans lequel l'appareil comprend :
une unité d'enregistrement (510), configurée pour enregistrer des premières informations de suivi concernant le déplacement d'un point de contact formé par le contact du doigt d'un utilisateur sur un écran tactile capacitif, les premières informations de suivi comprenant une étendue de contact à chaque instant d'échantillonnage lorsque le point de contact se déplace sur l'écran tactile ;
une unité de détermination (520), configurée pour déterminer, à partir des premières informations de suivi enregistrées par l'unité d'enregistrement, des secondes informations de suivi qui sont avant un processus dans lequel le point de contact quitte l'écran tactile ; et
une unité de positionnement (530), configurée pour positionner, selon les secondes informations de suivi déterminées par l'unité de détermination, une position à laquelle le point de contact quitte l'écran tactile, dans lequel l'unité de détermination est en outre configurée pour :
rejeter des informations de suivi au sein d'une période prédéterminée correspondant à un processus dans lequel le point de contact quitte l'écran tactile ; dans lequel
l'unité de détermination est spécifiquement configurée pour déterminer la période en tant que période durant laquelle l'étendue de contact change de façon continue dans un processus dans lequel le point de contact quitte l'écran tactile et utiliser une étendue de contact du point de contact à un instant d'échantillonnage qui est immédiatement avant la période en tant que secondes informations de suivi qui sont avant le processus dans lequel le point de contact quitte l'écran tactile ; et
l'unité de positionnement est spécifiquement configurée pour calculer une position selon l'étendue de contact du point de contact à l'instant d'échantillonnage qui est immédiatement avant la seconde période, et déterminer la position obtenue par calcul en tant que position à laquelle le point de contact quitte l'écran tactile, dans lequel l'étendue de contact du point de contact à l'instant d'échantillonnage qui est immédiatement avant la période est déterminée par l'unité de détermination.

4. Appareil selon la revendication 3, dans lequel les premières informations de suivi enregistrées par l'unité d'enregistrement comprennent en outre :
des informations concernant une position à chaque instant d'échantillonnage lorsque le point de contact se déplace sur l'écran tactile.
